# EUROPEAN PATENT SPECIFICATION

(11) **EP 0 308 685 B1**
(45) Date of publication and mention of the grant of the patent: **15.06.1994**
(21) Application number: 88113962.0
(22) Date of filing: 09.12.1985
(51) Int. Cl.: B29C 55/26, B29C 57/00

(54) **A hollow body, and a method and apparatus for making such a hollow body**
Hohlkörper und Verfahren und Vorrichtung zu dessen Herstellung
Corps creux, procédé et dispositif pour sa fabrication

(30) Priority: 14.12.1984 SE 8406373
(43) Date of publication of application: 29.03.1989
(62) Divisional of application: 86900323.6
(73) Proprietor: PLM AB, 201 80 Malmö (SE)
(72) Inventor: Nilsson, Torsten, S-240 21 Löddeköpinge (SE)
(74) Representative: Wiklund, Erik

(56) References cited:
- EP-A- 0 075 068
- DE-C- 827 550
- US-A- 3 812 696
- US-A- 4 036 514

## Description

The present invention relates to a method of shaping an open mouth of a preform.

It is known to shape an open mouth of a preform by a mechanical means wherein the mechanical means deforms the mouth by reducing its diameter and thereafter folds the open end region of the mouth outwardly to form a flange suitable for subsequent operations such as double seaming a lid to a container in order to close it.

US-A-3 812 696 teaches a technique according to the previous paragraph. To prevent collapse of the container body at the time the mechanical means engages the open end, air under pressure passes into the container. The technique has the drawback that the container wall is capable of resisting relatively small axial forces only, especially thin-walled containers. Moreover, as the material is deformable, the overpressure within the container means that the body wall of the container is at risk to get a permanent deformation.

The present invention relates to a method where the drawbacks of the technology described above are obviated.

The invention is defined in appended claim 1.

By the use of a tubular sleeve, which is supporting the preform while shaping the mouth portion of the preform, no circumferential expansion of the wall of the preform takes place.

Further expedient embodiments of the present invention are set forth in the dependent claims.

In the dependent claims further appropriate embodiments of the invention are stated.

The invention is described in greater detail in connection with a number of figures, where
- Figs. 1-5: show the shaping of a preform into an intermediate preform by extension of the preform in its axial direction when the preform passes through a gap that reduces the material thickness,
- Figs. 6-9: show expansion of the preform in its circumferential direction, and
- Figs. 10-13: show reshaping of the expanded preform into a container.

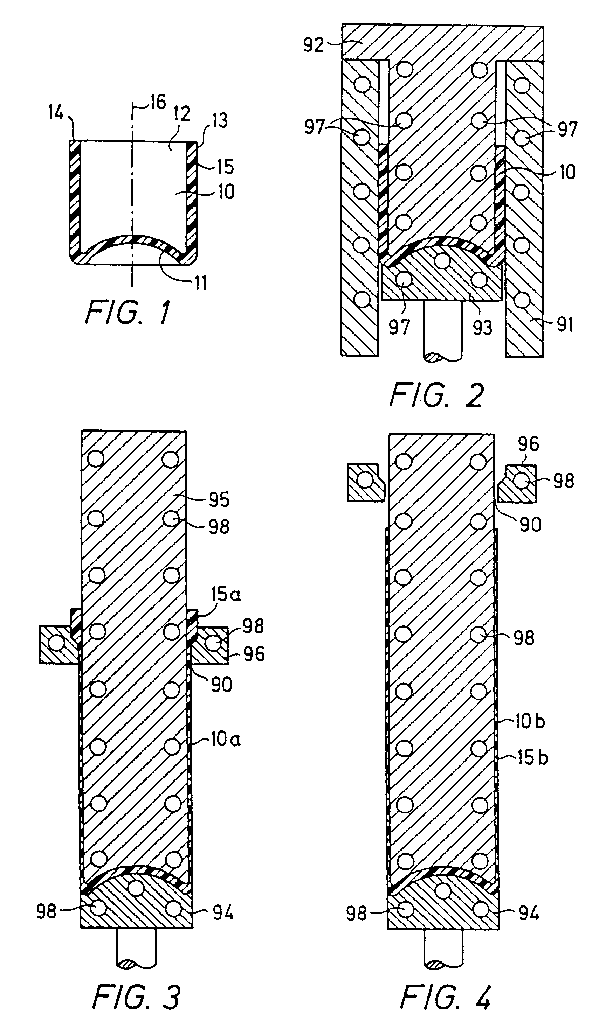

Fig. 1 contains a preform 10 with a bottom section 11, a mouth 12, a ribbon-shaped, circumferential mouth edge region 13, a mouth edge 14, and an axially directed wall 15, located between the mouth and the bottom section. The central axis of the preform is denoted by reference numeral 16. The preform is, in Fig. 2, placed in an apparatus for temperature setting of the preform material. The apparatus includes a sleeve 91, a mandrel 92 and a bottom support 93. All these devices are provided with channels 97 through which a fluid, such as a liquid passes for individual setting of each device to a certain working temperature. The devices are adjustable to positions where there is formed between them a cavity whose shape substantially corresponds to that of the preform. A preform which is placed in the cavity is thus enclosed on both the inside and the outside by the devices and assumes a temperature which in every part of the preform is determined by the temperatures of the adjoining devices and the time the preform stays in the cavity.

Figs. 3 and 4 show a basic apparatus for reduction of the material thickness of the preform during its simultaneous extension in the axial direction. The apparatus includes a bottom support 94, a mandrel 95 and a traction device 96 which encloses the mandrel and is displaced in its axial direction by displacement devices (not shown in the Figures). Between the mandrel and the traction device there is located a slot 90 the breadth of which less than the material thickness of the axially directed wall of the preform. The traction devices and/or the mandrel as well as the bottom support are, as a rule, provided with channels 98 through which fluid, such as a liquid passes for regulation of the temperature of the devices. Depending on the application, heat is either supplied or removed by means of the liquid. There is a preform 10a,b located in the apparatus, and its wall 15a,b undergoes, has undergone respectively an axial stretching (extension) and associated crystallisation.

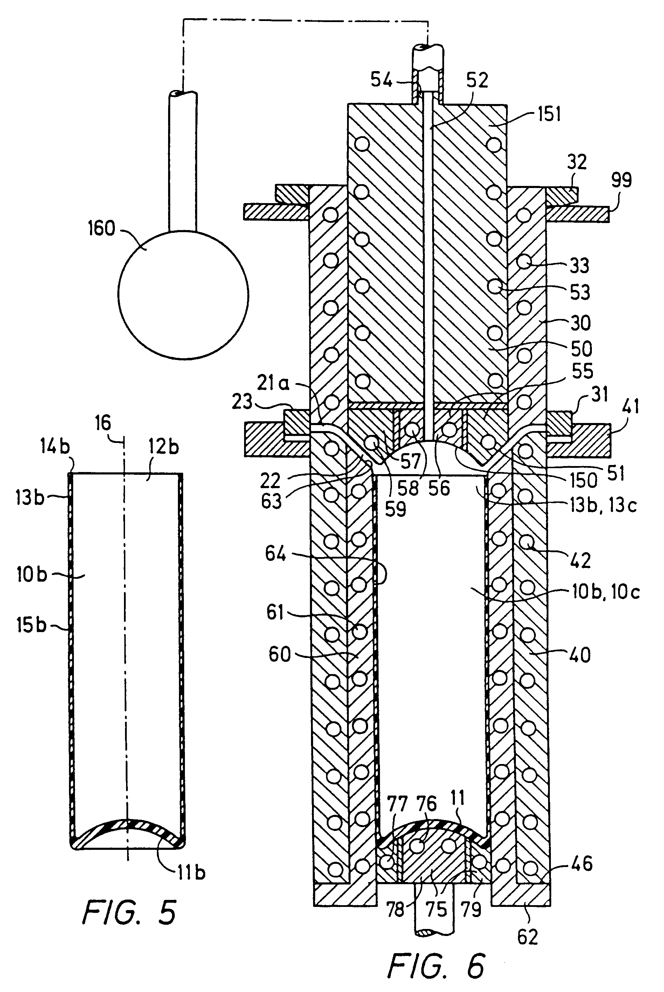

Fig. 5 shows an intermediate preform 10b, formed by axial stretching of preform 10. The intermediate preform has a bottom section 11b, a mouth 12b, a ribbon-shaped mouth edge region 13b, a mouth edge 14b, an axially directed wall 15b and a centre axis 16, i.e. the parts of the intermediate preform have reference numerals directly equivalent to those used for the preform 10 described in connection with Fig. 1.

The Figures 6-9 show a basic embodiment of an apparatus comprising an upper sleeve 30 and an lower sleeve 40 provided with channels 42 for temperature setting of the sleeve, and which sleeve is assumed to occupy a spatially fixed position, e.g. sleeve 40 is affixed to a frame (not shown). The upper sleeve 30 is provided with channels 33 for flow of a fluid for temperature setting of the sleeve, in addition to which there is disposed inside the sleeve a mandrel 50 which by drive means (not shown in the Figure) is displaceable relative to the upper sleeve in the axial direction of the sleeve. The part 55 of the mandrel facing the lower sleeve 40, hereinafter termed the bottom section, has a shape mainly adapted to the shape of the bottom 11b of the intermediate preform 10b, and is in the embodiment shown in the Figure thermally insulated from the rest of the mandrel, hereinafter termed the upper section 151 of the mandrel. The bottom section has, in turn, a central section 56 which is thermally insulated from the outer circumferential portion 57 of the bottom section. In the bottom section there are disposed channels 58,59 for temperature setting of the central section of the bottom section and its circumferential portion, respectively. The upper section 151 of the mandrel is also provided with channels 53 for temperature setting. The upper section of the mandrel , the central section of the bottom section, and its circumferential portion are thus individually adjustable to required temperatures. A channel 52 for a pressure medium is disposed in the mandrel and is joined in the upper section of the mandrel via a connection device 54 to a pressure source 160, and is disposed in the lower section of the bottom section in order to open into the lower limiting surface 150 of the bottom section. Inside the lower sleeve 40 there is disposed an inner sleeve 60, displaceable in the axial direction of the sleeve 40 by drive means (not shown in the Figures), the inner surface 64 of which has a shape primarily in correspondence with the outer surface of the intermediate preform. Channels 61 are provided for temperature setting of the inner sleeve.

A bottom support 75 is disposed inside the inner sleeve 60 for axial displacement therein by drive means (not shown in the Figures). In certain embodiments the bottom support is divided into a central section 78 and an outer circumferential section 79, thermally insulated from the former, corresponding to what has been shown in respect of the bottom section 55 of the mandrel. Channels 76,77 for temperature setting of the bottom support are disposed therein, for which reason the central section of the bottom support and its circumferential section are also individually adjustable to required temperatures.

The upper sleeve 30 is provided with an upper stop device 32 which engages with an upper check (stop) device 99 e.g. adjustably affixed to the aforementioned frame and placed in a position such that when the upper stop device 32 abuts the upper check device 99 there is formed between the upper sleeve 30 and the lower sleeve 40 a columnar cavity 21a the breadth of which (the distance between the upper and the lower device in the Figure) exceeds the wall thickness of the circumferential mouth edge region 13b,c of the intermediate preform 10b,c. In the vicinity of the outer end region of the columnar cavity there is usually a device 23 which blocks cavity 21a entirely or partially.

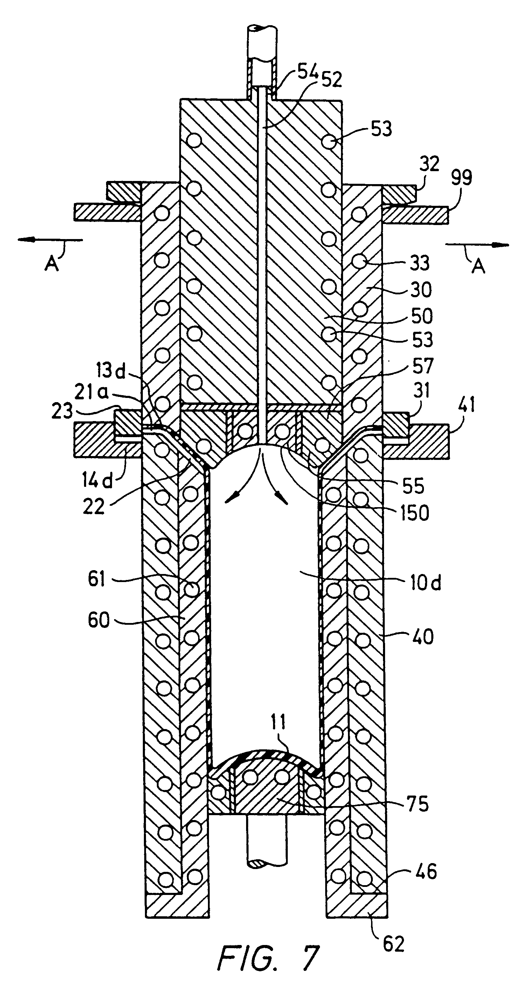

The upper check device 99 can be displaced by the displacement devices (not shown in the Figures) to assume a position where it engages the stop device 32 and a position where the stop device 32 can at least partly travel therepast, whereby the upper sleeve 30 can be moved nearer to the lower sleeve 40 (cf. arrows A in Fig. 7).

The inner sleeve 60 is provided with stop devices 62 which in the upper position of the sleeve abut check (stop) devices 46 in the lower sleeve 40. The stop device 62 and the check device 46 establish during abutment, that the upper limitation surface 63 of the inner sleeve 60, which surface has a shape substantially corresponding to that of the bottom section 55 of the mandrel, forms with said bottom section a columnar cavity 22 with a breadth somewhat exceeding the wall thickness in the mouth edge region. The cavity 22 connects with the cavity 21a so that the two cavities together comprise a linked slot 21a-22 the width of which somewhat exceeds the thickness of the mouth edge region. The bottom section 55 of the mandrel has a design such that its lower limitation surface 150, in a region 51 adjacent the upper limitation surface 63 of the inner sleeve 60, has an downwards and outwards directed location with the result that the limitation surface in this region comprises a guide surface delimitating the columnar cavity 22. In the case of a divided bottom section the guide surface is located on the circumferential outer portion 57 of the bottom section.

The upper sleeve 30 is provided with another stop device 31 which engages a check (stop) device 41 disposed on the lower sleeve 40. The stop device 31 and the check device 41 have a mutual location such that when the stop device 31 abuts against the check device 41 a cavity 21b is formed between the upper sleeve and the lower sleeve, the cavity being of a slotlike shape having a width somewhat less than the wall thickness of the intermediate preform. In Figures 6-9, the stop device 31 also forms the device 23 which blocks the columnar cavity 21b outwards. Finally, it should be mentioned that in Figs. 6-9 the intermediate preform has reference characters 10c to 10f, which refer to the actual reshaping stage of the preform.

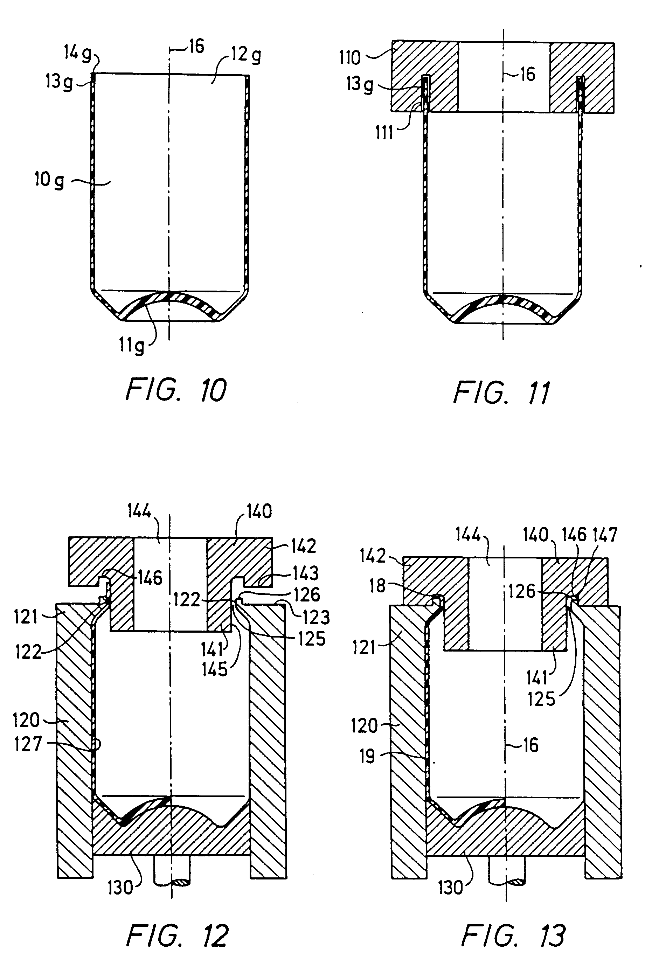

Figs. 10-13 show a reshaped intermediate preform 10g which, compared with the intermediate preform 10c in Fig. 6, has an increased cross-section. In Fig. 11 the ribbon-shaped mouth edge region 13g of the reshaped intermediate preform has been inserted into a slot-shaped recess 111 in a heating device 110.

Figures 12-13 show an outer sleeve 120 having an inner surface 127 which in the upper section 121 of the sleeve, continuously merges into an inner mouth surface 122 with a reduced circumference. A bottom support 130 is supported for displacement within the sleeve by drive means (not shown in the Figures) in the axial direction of the sleeve. In addition, Figures 12-13 show an upper mandrel 140 with a lower, primarily cylindrical section 141 and an upper section 142 with a greater circumference than the cylindrical section. The lower cylindrical section of the mandrel is adapted to the mouth surface 122 of the outer sleeve such that there is formed between the outer limitation surface 145 of the mandrel an inner mouth surface 122, a slot 125 with a breadth somewhat exceeding the material thickness of the mouth edge region 13g of the preform. The outer surface 145 of the mandrel has, in the transition between the lower section 141 and the upper section 142, a shape adapted to the shape of the upper surface 126 of the outer sleeve 120 and forms after the transition a surface 146 primarily parallel to the upper surface of the sleeve in order to form a cavity or a slot 147 between the upper section 142 of the mandrel and the upper section 121 of the sleeve 120, when the mandrel is in its lower position; the cavity 147 forms a continuation of the slot 125, having a breadth that allows the edge region 13g of the reshaped intermediate preform to be inserted into the cavity. The outer sleeve 120 and the mandrel 140 are provided with stop surfaces 123 and 143 respectively, which guarantee the intended distance in the axial direction between the sleeve and the mandrel and thus the intended breadth of the cavity or slot 146. The upper mandrel is, in certain embodiments, also provided with a channel 144 which, in certain applications, is used in order to supply a pressure medium to the interior of the preform 10g during its reshaping.

In an embodiment, the preform 10 is inserted in an apparatus 91-93 for setting of the material of the preform, at least in its primarily cylindrical section, to a suitable shaping temperature, preferably to a temperature exceeding the glass transition temperature of the material (cf. Fig. 2). The heated preform is then moved to the apparatus illustrated in Fig. 3 in which the wall thickness of the preform is reduced during simultaneous axial extension of the wall as well as orientation and/or crystallisation of its material (cf. Figs. 3 and 4) for formation of the intermediate preform 10b, the primarily cylindrical section of which consists of stretched and oriented and/or crystallised material. Fig. 3 shows the preform during reshaping into the intermediate preform 10b. In the orientation/crystallisation, the material passes through the slot 90, by which means the material in an embodiment obtains an orientation equivalent to that which occurs during material flow. As it moves into the slot, the material generally has a temperature exceeding its TG.

The intermediate preform 10b thus formed is then placed in the reshaping device 30,40,50,60,75 illustrated in Figures 6-9. The intermediate preform is reshaped into an expanded intermediate preform 10f in the reshaping device. In order to allow reshaping, the intermediate preform 10b is first placed in a position where it is enclosed by the inner sleeve 60 and abuts the bottom support 75. In this position, a temperature conditioning of the intermediate preform 10b generally takes place, in that the inner sleeve has a temperature generally somewhat exceeding the glass transition temperature of the material (cf. Fig. 6). If this temperature conditioning is performed at a temperature which exceeds the temperature which the material has when passing through the slot 90, the intermediate preform shrinks axially. In Fig. 6 these two alternatives are denoted in that the intermediate preform has reference characters 10b and 10c, respectively, where 10c indicates that the intermediate preform has shrunk during the temperature conditioning.

The bottom support 75 is subsequently displaced upwards (cf. Fig. 7) at the same time as the interior of the intermediate preform is pressurised by a pressure medium supplied via the channel 52 from the pressure source 160. In certain applications, the pressure medium is heated in order to maintain or at least contribute towards maintaining the material of the intermediate preform at the required temperature. The inner sleeve 60 and lower sleeve 40 thus have, relative to the mandrel 50 and upper sleeve 30 respectively, positions such that the previously described linked slot 21a,22 is formed. Fig. 7 shows an embodiment where this positional setting is achieved by the upper stop device 32 when engaging with the upper check device 99 and by the lower stop device 62 when engaging the lower check device 46. The relative locking between the devices means that during the upwards motion of the bottom support, the mouth edge 14b,14c of the intermediate preform as well as the adjoining mouth edge region 13b,13c are displaced into the slot during simultaneous increase of the circumference of the intermediate preform in its mouth 12b,12c. This displacement of the bottom support 75 and thus the intermediate preform continues until the mouth edge 14d reaches the stop device 31 of the upper sleeve 30. In certain embodiments, the circumferential outer portion 57 of the bottom section has an elevated temperature (a temperature exceeding TG) in order to make the material more adapted to expand in the circumferential direction.

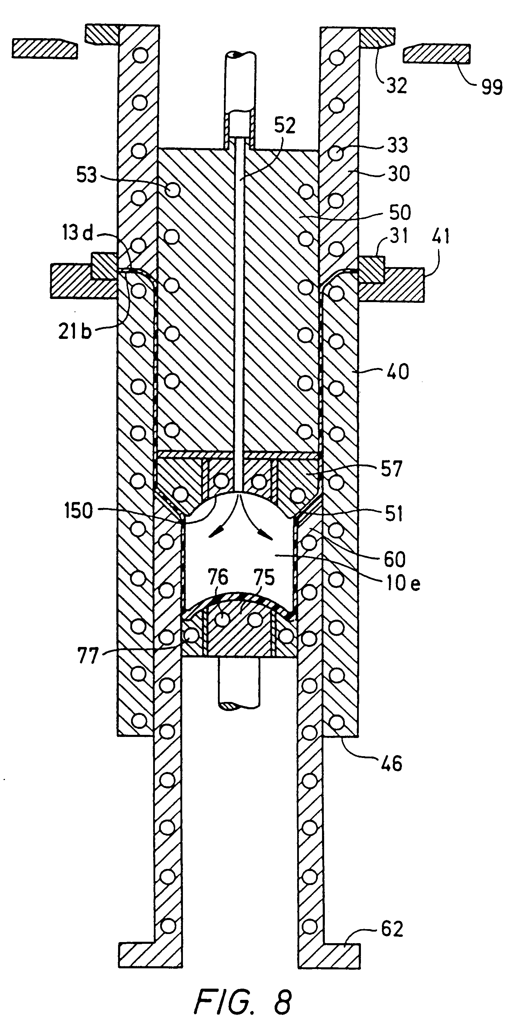

The upper check device 99 is subsequently displaced to the position where it can be passed by the stop device 32 (cf. Fig. 8), after which the upper sleeve 30 is displaced towards the lower sleeve 40 until the stop device 31 of the upper sleeve abuts against the check device 41 of the lower sleeve. In this position, the material portions 13d are clamped in place next to the expanded mouth edge of the intermediate preform (i.e. equivalent to the ribbon-shaped circumferential mouth edge region 13d) between the upper sleeve and the lower sleeve. In the abutment regions for the material portions, the sleeves have temperatures in excess of TG.

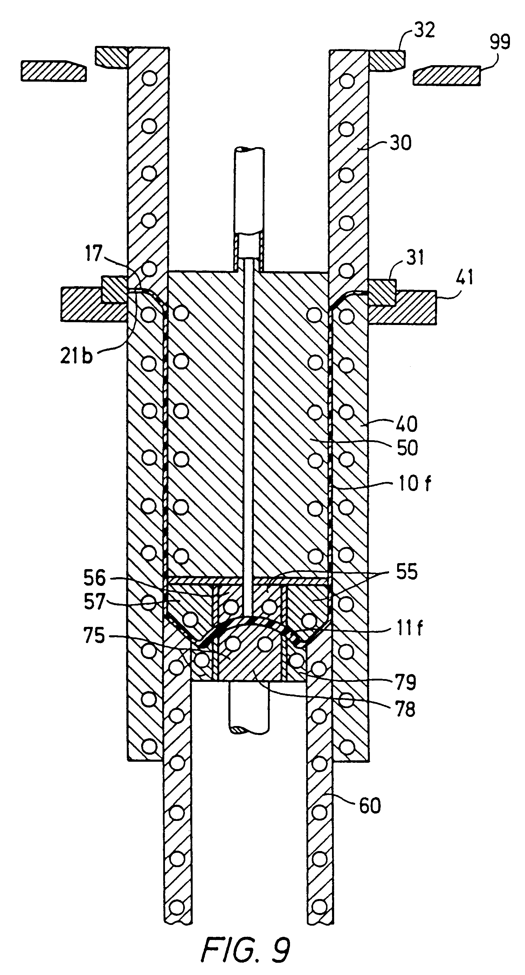

The inner sleeve 60 is subsequently displaced downwards in the Figures at the same time as the mandrel 50 which successively expands the intermediate preform in its circumferential direction. The mandrel thus has, at least in the region 51 where it abuts the material of the intermediate preform, a temperature above the TG of the material. As a rule, the downwards movements of the mandrel 50 and the inner sleeve 60 are synchronised so that the aforementioned slot 22 is maintained between the bottom section of the mandrel and the upper portions of the sleeve. By retaining the material in the mouth region of the intermediate preform in place, the intermediate preform is kept fixed between the upper sleeve 30 and the lower sleeve 40 whereby during the expansion the material in the intermediate preform is also subjected to axially directed stretching forces through the movement of the mandrel. As a rule, the bottom support 75 is simultaneously allowed to exert an upwardly directed force on the intermediate preform to reduce the magnitude of the stretching forces in the material of the intermediate preform, when this material is pressed upwards over and expanded by the mandrel. Practically, it has been shown that the retention of the edge portions of the intermediate preform achieves a good result in production and a high production capacity. In those applications where the retention effect is supplemented by an upwardly directed pressing force from the bottom support 75, both a further improved result and a shortened cycle time are generally achieved. Fig. 9 shows the shaping devices after a completed movement and the expanded intermediate preform 10f.

Immediately after expansion, the expanded material of the intermediate preform abuts against the outer surface of the mandrel 50, and as a rule also the inner surface of the lower sleeve 40. These two surfaces preferably have a temperature exceeding the TG of the material and as a rule one considerably exceeding the TG. Whereby, the material is temperature-stabilised while retaining the shape that was determined by the lower sleeve 40 and the mandrel 50. The selected temperature of both the sleeve and the mandrel and thus the temperature up to which temperature stability is achieved is determined by the maximum temperature at which the product which is being shaped is intended to be used. Thus, for polyethylene terephthalate (PET), containers have been manufactured which are temperature-stable up to approximately 160°C in that the inner surface had a temperature exceeding 160°C. In certain applications, the mandrel 50 is also given a corresponding increased temperature. As will be evident from Fig. 9 the expanded intermediate preform 10f has in its mouth section an outwards-facing edge flange 17. In certain applications this is cut off, whereby the expanded intermediate preform 10g is formed (cf. Fig. 10).

As will be evident from the above description, the bottom section 55 of the mandrel 50 also includes both the central bottom section 56 and the circumferential outer portion 57, which are adjustable to specific temperatures independently of each other. The bottom support 75 is likewise disposed with similarly separated sections 78,79. In certain applications this enables separate heat treatment of the material in the bottom section 11f,11g of the expanded intermediate preform so that when the material has a low crystallisation it is possible to thermally increase the same in order to achieve temperature-stable and shape-stable material portions. Thus, it is possible in accordance with the invention to obtain in the bottom section of the intermediate preform annular opaque material portions or disc-like ones.

Figures 10-13 illustrate an embodiment of the invention where the expanded intermediate preform 10g with its mouth flange being cut is reshaped in its mouth section. For this purpose, the ribbon-shaped circumferential mouth edge region 13g of the intermediate preform is inserted into the slot-shaped recesses 111 in the heating device 110. The material is thus heated to a temperature somewhat exceeding the aforementioned maximum temperature at which the container which is being manufactured is intended to be used.

The intermediate preform expanded in this manner is subsequently introduced into the sleeve 120 for reshaping of the mouth 12g of the intermediate preform. By means of relative motion between the bottom support 130 and the sleeve 120 the heated material is pressed into the slot 125 between the mandrel 140 and the upper section 121 of the sleeve 120 with a reduced diameter, whereby the circumference of the expanded intermediate preform in the mouth section is reduced. By means of a subsequent relative movement between the mandrel 140 and the sleeve 120 while simultaneously supporting the intermediate preform by the bottom support 130 (with the interior of the intermediate preform being pressurised if necessary or required) upper edge portions of the intermediate preform are folded outwards and move into the slot 147 between the upper section 142 of the mandrel and the upper section 121 of the sleeve for the formation of an outwards-facing flange 18. Thus, an embodiment of a hollow body (container) 19 in accordance with the invention is completed.

In the above description the expressions upper, lower, vertical, etc. have been used, which should, however, be considered solely as a means of facilitating the description. It is evident that the apparatus described herein can assume arbitrary orientations. It is also possible to allow the preform, intermediate preform, and the finished container to have an arbitrary cross-section which may also have a different shape in different sections of both preform, intermediate preform, and finished container. The reshaping of the mouth section described in the preceding paragraph is also applicable to intermediate preforms of non-circular cross-section. The technique is also applicable to shape non-circular into circular mouth portions.

## Claims

1. A method of shaping an open mouth (12g) of a substantially tubular preform (10g) of orientable and/or crystallisable plastics material and having a closed bottom, comprising the steps of:
a) supporting the closed bottom on a bottom support (130),
b) applying force to the preform (10g) inwardly of the preform, by means of a sleeve (120), to inwardly displace an edge region (13g) at the open mouth (12g) of the tubular preform around the circumference of the tubular preform to provide an edge region with a reduced diametral extent compared to the diametral extent of the tubular preform,
c) folding a terminal end portion of said edge region outwardly, by means of a mandrel (140), to form an outwardly facing flange (18) on said edge region,
d) displacing the bottom support (130) axially within the sleeve (120) to axially displace the preform relative to the sleeve whereby a portion of the sleeve remote the bottom support (130) produces said force to the preform inwardly of the preform, and
e) displacing the mandrel (140), which is positioned within the sleeve (120) and forms a circumferential gap (125) therewith, through which gap the edge region extends, towards the bottom support (130) to produce said outwardly folding of the terminal end portion.

2. A method as claimed in claim 1, wherein said edge region is heated prior to the inward displacement thereof.

3. A method as claimed in claim 1 or 2, wherein the material at the edge region of said preform (10g) is oriented.

4. A method as claimed in any foregoing claim, wherein during the inward displacing of the edge region the interior of the preform (10g) is pressurized.

## Patentansprüche

1. Verfahren zum Formen einer offenen Mündung (12g) eines im wesentlichen röhrenförmigen Vorformlings (10g) aus orientierbarem und/oder kristallisierbarem Kunststoffmaterial, der einen geschlossenen Boden aufweist, das die Schritte aufweist:
a) den geschlossenen Boden auf einer Bodenabstützung (130) abzustützen,
b) Kraft auf dem Vorformling (10g) zum Inneren des Vorformlings hin mit Hilfe eine Hülse (120) auszuüben, um einen Randbereich (13g) der offenen Mündung (12g) des röhrenförmigen Vorformlings um den Umfang des röhrenförmigen Vorformlings herum nach innen zu verschieben, um einen Randbereich mit im Vergleich zur diametralen Ausdehnung des röhrenförmigen Vorformlings verringerter diametraler Ausdehnung zu schaffen,
c) einen Endbereich des Randbereiches nach außen mit Hilfe eines Dorns (140) zu falten, um an dem Randbereich einen nach außen gerichteten Flansch (18) zu bilden,
d) die Bodenabstützung (130) axial innerhalb der Hülse (120) zu verschieben, um den Vorformling relativ zur Hülse axial zu verschieben, wobei ein von der Bodenabstützung (130) entfernter Bereich der Hülse die Kraft auf den Vorformling zum Inneren des Vorformlings hin erzeugt, und
e) den Dorn (140), der innerhalb der Hülse (120) angeordnet ist und einen Umfangszwischenraum (125) mit derselben bildet, durch welchen Zwischenraum sich der Randbereich erstreckt, zur Bodenabstützung (130) hin zu verschieben, um das Falten des Endbereiches nach außen zu erzeugen.

2. Verfahren nach Anspruch 2, bei dem der Endbereich vor seiner Verschiebung nach innen erwärmt wird.

3. Verfahren nach Anspruch 1 oder 2, bei dem das Material am Randbereich des Vorformlings (10g) orientiert ist.

4. Verfahren nach einem der vorangehenden Ansprüche, bei dem während der Verschiebung des Randbereiches nach innen das Innere des Vorformlings (10g) unter Druck gesetzt wird.

## Revendications

1. Procédé de moulage d'une bouche ouverte (12g) d'une ébauche sensiblement tubulaire (10g) en matière plastique orientable et/ou cristallisable et ayant un fond fermé, comprenant les phases consistant à :
a) donner appui au fond fermé sur un support de fond (130),
b) appliquer une force à l'ébauche (10g) à l'intérieur de l'ébauche, au moyen d'un manchon (120) pour déplacer vers l'intérieur une région de bord (13g) située à la bouche ouverte (12g) de l'ébauche tubulaire, sur le tour de la circonférence de l'ébauche tubulaire, pour donner à la région de bord une dimension diamétrale réduite, comparativement à la dimension diamétrale de l'ébauche tubulaire,
c) replier une partie d'extrémité terminale de ladite région de bord vers l'extérieur, au moyen d'un mandrin (140) pour former une collerette (18) regardant vers l'extérieur sur ladite région de bord,
d) déplacer le support de fond (130) axialement à l'intérieur du manchon (120) pour déplacer l'ébauche axialement relativement au manchon, une partie dudit manchon qui est éloignée du support de fond (130) exerçant alors ladite force sur l'ébauche à l'intérieur de l'ébauche ; et
e) déplacer le mandrin (140) qui est positionné dans le manchon (120) et forme avec celui-ci une fente circonférentielle (125) à travers laquelle fente la région de bord s'étend, vers le support de fond (130) pour produire ledit repliage de la partie d'extrémité terminale vers l'extérieur.

2. Procédé selon la revendication 1, dans lequel ladite région de bord est chauffée avant son déplacement vers l'intérieur.

3. Procédé selon la revendication 1 ou 2, dans lequel la matière située dans la région de bord de ladite ébauche (10g) est orientée.

4. Procédé selon une quelconque des revendications précédentes, dans lequel, pendant le déplacement de la région de bord vers l'intérieur, le volume intérieur de l'ébauche (10g) est mis sous pression.
